# EUROPÄISCHE PATENTSCHRIFT

(11) **EP 1 147 155 B1**
(45) Veröffentlichungstag und Bekanntmachung des Hinweises auf die Patenterteilung: **15.09.2004**
(21) Anmeldenummer: 00901528.0
(22) Anmeldetag: 11.01.2000
(51) Int. Cl.: C09J 157/00

(54) **WIEDERANFEUCHTBARE KLEBSTOFFSYSTEME**
REWETTABLE ADHESIVE SYSTEMS
SYSTEME D'ADHESIF POUVANT ETRE REHUMECTE

(30) Priorität: 19.01.1999 DE 19901828
(43) Veröffentlichungstag der Anmeldung: 24.10.2001
(73) Patentinhaber: Celanese Emulsions GmbH, 61476 Kronberg/Ts. (DE)
(72) Erfinder: HINTZ, Helmut, D-61184 Karben (DE); CABRERA, Ivan, D-63303 Dreieich (DE)
(74) Vertreter: Ackermann, Joachim, Dr., Patentanwalt Dr. Ackermann
(86) Internationale Anmeldenummer: PCT/EP2000/000146
(87) Internationale Veröffentlichungsnummer: WO 2000/043461

(56) Entgegenhaltungen:
- US-A- 3 696 065
- US-A- 5 376 447

## Beschreibung

Die vorliegende Erfindung betrifft wiederanfeuchtbare Klebstoffsysteme enthaltend neue Kolloiddispersions-Mischungen, sowie deren Verwendung.

Für die-Herstellung wiederanfeuchtbarer Klebstoffbeschichtungen, auch unter Gummierung bekannt, die für Briefmarken, Briefumschläge, Etiketten u.ä. Verwendung finden, werden neben Naturprodukten wie Stärke, Dextrin- und Glutinleimen auch in beträchtlichem Umfang Polyvinylalkohole eingesetzt. Es handelt sich dabei hauptsächlich um niedermolekulare, teilverseifte Polyvinylalkoholtypen, die entweder durch saure oder auch alkalische Verseifung erhalten werden (DD-PS 62 634). (Bekanntlich sind Vinylalkohol-Polymere nicht über eine Polymerisation wasserlöslicher Monomerer erhältlich.) Polyvinylalkohole haben den Vorteil, daß in der Wärme Lösungen mit einem Feststoffgehalt bis 45 % möglich sind, die bei ausreichender Konservierung über längere Zeit gelagert werden können und nicht gelieren. Um gewisse Blockfestigkeiten der getrockneten Beschichtungen zu garantieren, werden die Polyvinylalkohollösungen häufig mit homopolymeren Polyvinylacetatdispersionen abgemischt (DD-A-275 069 bzw. EP-A-0 705 896). Im Falle eines gewünschten Oberflächenglanzes können auch copolymere Kunststoffdispersionen Verwendung finden. Zur besseren Reemulgierbarkeit wird häufig ein Zusatz von Glycerin oder auch Harnstoff mitverwendet. Je nach Abmischungsverhältnis zwischen Polyvinylalkohol und Kunststoffdispersion kann die Tackentwicklung nach Anfeuchtung des getrockneten Klebstoffilmes beeinflußt werden.

Einige der bekannten Gummierleime haben erhebliche Nachteile nach Lagerung der getrockneten Beschichtung, insbesondere in der Wärme bei 100°C und über einen Zeitraum von 24 Stunden.

Häufig wird nach Lagerung eine Veränderung der Beschichtung in der Weise festgestellt, daß diese sich mit Wasser nicht mehr aktivieren läßt. Die Beschichtung ist dann inaktiv und als Gummierleim nicht mehr brauchbar. Aufgabe der vorliegenden Erfindung war es somit, ein wiederanfeuchtbares Klebstoffsystem bereitzustellen, welches sich ohne Veränderung lagern läßt und sehr gut und innerhalb sehr kurzer Zeit reaktivieren läßt.

Überraschenderweise wurde gefunden, daß neuartige Kolloiddispersionsmischungen als Bestandteil in wiederanfeuchtbaren Klebstoffsystemen diese Aufgabe lösen.

Gegenstand der vorliegenden Erfindung ist somit ein wiederanfeuchtbares Klebstoffsystem, das im Patentanspruch 1 definiert ist.

In der EP-A-0 894 309 werden Kolloiddispersions-Mischungen, Verfahren zu deren Herstellung sowie deren Verwendung als Schutzkolloid für die Emulsionspolymerisation beschrieben.

Der Anteil des mindestens einen wasserlöslichen Monomeren in der Kolloiddispersionsmischung liegt dabei vorzugsweise im Bereich von 70 bis 95 Gew.-% und besonders bevorzugt im Bereich von 75 bis 90 Gew.-%.

Der Anteil des mindestens einen wasserunlöslichen Monomeren in der Kolloiddispersionsmischung liegt folglich vorzugsweise im Bereich von 5 bis 30 Gew.-% und besonders bevorzugt im Bereich von 10 bis 25 Gew.-%.

Der Anteil der Kolloiddispersionsmischung im wiederanfeuchtbaren Klebstoffsystem liegt dabei im Bereich von 5 bis 100 %, vorzugsweise im Bereich von 10 bis 100 % und besonders bevorzugt im Bereich von 20 bis 100 %, das heißt, dass die Kolloiddispersionsmischung entweder allein oder in Form einer Abmischung mit anderen Produkten verwendet werden kann, ohne das Eigenschaftsbild der Kolloiddispersion negativ zu beeinflussen.
Als Abmischkomponenten eignen sich Kunststoffdispersionen unterschiedlicher Monomerenzusammensetzung, Polyvinylalkohole und/oder Stärken.

Gegenüber wiederanfeuchtbaren Klebstoffsystemen auf Basis von Dextrin oder Polyvinylalkohol zeigt das erfindungsgemäße Klebstoffsystem der vorliegenden Anmeldung eine extrem kurze Reaktivierungszeit. D.h. sofort nach Befeuchtung des getrockneten Filmes bildet sich ein sehr hoher Naßtack aus, der eine sofortige Verklebung ermöglicht, was für schnell laufende Verschlußautomaten unverzichtbar ist. Selbst bei sehr geringen Auftragsmengen ist noch eine ausreichend schnelle Reaktivierung möglich. Bei Auftragsmengen von ca. 100 g/m² und mehr, wird neben der schnellen Tackausbildung auch ein ausgeprägter Fadenzug festgestellt, was eine optimale Benetzung der Substrate zur Folge hat.

Die die Kolloiddispersion enthaltenden Klebstoffe eignen sich insbesondere für Systeme, die durch Anfeuchten mit Wasser reaktiviert werden, Klebrigkeit ausbilden und dadurch eine Verklebung ermöglichen. Beispiele für die Anwendung sind: Briefmarken, Mundklappenleime für Briefumschläge, wiederanfeuchtbare Klebebänder und Wiederaufnahmeklebstoffe für den Fußbodenbereich.

Wiederaufnahmeklebstoffe werden für die Verklebung textiler Fußbodenbeläge herangezogen, da diese eine schnelle Renovierung, d.h. Austausch des Teppichbelages ermöglichen. Nach Heraustrennen des Fußbodenbelages können noch am Boden anhaftende Klebstoffreste nach Einwirkung von Wasser leicht entfernt werden.

Die Klebstoffe können entweder mit der Rolle, oder einem Zahnspachtel aufgebracht werden. Der textile Belag mit Doppelrückenausbildung kann direkt nach kurzer Ablüftphase in das noch nasse Klebstoffbett eingelegt werden.

Überraschenderweise wurde gefunden, daß in Anwesenheit eines Emulgators, der Micellen bildet, die Copolymerisation von einem wasserlöslichen Monomer mit einem nicht wasserlöslichen Comonomer zu Kolloiddispersionsmischungen des Copolymers führt.

Emulgatoren stabilisieren die feindispersen Polymerteilchen, welche durch die Emulsionspolymerisation erzeugt werden. Bei den Emulgatoren handelt es sich üblicherweise um oberflächenaktive Stoffe bzw. Tenside. Tenside verfügen über einen charakteristischen Aufbau und weisen mindestens eine hydrophile und eine hydrophobe funktionelle Gruppe auf. Durch diesen Aufbau können sich Tenside an der Grenzfläche zwischen Polymer- und Wasserphase anreichern und durch sterische bzw. elektrostatische Effekte ein Verschmelzen der feindispergierten Polymerteilchen verhindern. Ist der hydrophile Teil elektrisch ungeladen, spricht man von einem nichtionischen Emulgator, besitzt er negative Ladung, so nennt man ihn einen anionischen Emulgator, und sind positive Ladungen vorhanden, hat man es mit einem kationischen Emulgator zu tun. Gibt man Tenside in Wasser, bilden sich bei Überschreitung einer bestimmten Konzentration Kugelmicellen aus. Diese Eigenschaft von Tensiden hat eine große Bedeutung für die Durchführung der Emulsionspolymerisation. Diese sogenannte kritische Micellenkonzentration (KMK) ist stoffspezifisch für jedes Tensid. Erhöht man die Konzentration in Wasser deutlich über die KMK, ändert sich das Aggregationsverhalten der Tenside und es werden z.B. gestreckte Micellen (Stabmicellen) gebildet. Als Emulgatoren für die hier beschriebene Erfindung eignen sich sowohl nichtionische wie auch ionische Emulgatoren. Beispiele hierfür sind Alkylarylpolyglykolether und Alkylpolyglykolether mit jeweils 3 bis 50 mol Ethylenoxid-Einheiten, Blockcopolymere des Ethylenoxids mit Propylenoxid, Alkyloder Alkylarylsulfonate, Alkylsulfate, Alkyl- und Arylethersulfate und -phosphate mit jeweils vorzugsweise 8 bis 18 Kohlenstoff-Atomen im lipophilen und bis zu 50 Ethylenoxid- oder Propylenoxid-Einheiten im hydrophilen Teil sowie Mono- oder Diester der Sulfobernsteinsäure oder Alkylphenole mit jeweils vorzugsweise 8 bis 18 Kohlenstoffatomen im Alkylrest.

Vorzugsweise werden nichtionische Emulgatoren und Mischungen von ionischen mit nichtionischen Emulgatoren eingesetzt.

Als wasserlösliche Monomere werden vorzugsweise N-Methyl-N-Vinylacetamid, N-Vinylpyrrolidon oder N-Vinylformamid, als nichtwasserlösliche Comonomere unsubstituierte oder alpha-substituierte Ester der Acrylsäure eingesetzt. Bevorzugt sind die Alkylester der Acryl- oder Methacrylsäure, insbesondere die C₄ bis C₈ Alkylester, wie Butyl oder Ethylhexylester. Es können auch Gemische der Acrylester eingesetzt werden oder andere Monomere, wie z.B. Ester der Maleinsäure, bevorzugt Dioctylmaleinat.

Die Copolymerisation wird als radikalische Polymerisation bei Temperaturen von 15 bis 100°C, insbesondere 60 bis 90°C durchgeführt, als Radikalinitiator können sowohl wasserunlösliche Verbindungen wie 2,2'-Azo-bis-isobutyronitril oder 2,2'-Azo-bis(2-methylbutyronitril) oder wasserlösliche wie 2,2'-Azo-bis(2-amidinopropan)-dihydrochlorid eingesetzt werden.

Die Erfindung wird im folgenden anhand von Ausführungsbeispielen näher beschrieben, ohne dadurch jedoch beschränkt zu werden.

Prozentangaben sind immer Gewichtsprozente.

### Beispiel 1

### Herstellung einer Kolloiddispersionsmischung aus N-Vinylpyrrolidon und 2-Ethylhexylacrylat

1,6 g Natriumcarbonat und 23 g ®Emulsogen EPN 287 (Fettalkoholpolyglykolether, Clariant GmbH) werden in 497 g E-Wasser gelöst. Die Lösung wird auf 80°C erhitzt. Bei dieser Temperatur wird eine Mischung aus 300 g Vinylpyrrolidon und 100 g
2-Ethylhexylacrylat über 180 Minuten zudosiert. Parallel dazu dosiert man eine Lösung von 2 g Azo-bis-isobutyronitril in N-Vinyl-2-pyrrolidon zu. Nach Beendigung der Monomerdosierung wird die Reaktionsmischung 90 Minuten bei 80°C nachgeheizt, anschließend abgekühlt und bei unter 30°C über 180 µm-Filter abgelassen.

Die Kolloiddispersionsmischung weist folgende Merkmale auf:

| | |
|---|---|
| Feststoffgehalt | 30,3% |
| K-Wert | 66 |
| Partikelgrößenverteilung aus Mastersizer-Messung Volumen(Massen)-anteile: | dv(10%) 0.127 µm |
| | dv(50%) 0.418 µm |
| | dv(90%) 1.623 µm |
| N-Vinyl-2-pyrrolidon | 600 ppm |
| 2-Ethylhexylacrylat | < 25 ppm |

### Beispiel 2

### Herstellung einer Kolloiddispersionsmischung aus N-Vinylformamid und Dioctylmaleinat

1,6 g Natriumcarbonat und 16 g ®Arkopal N 308 (Nonylphenolpolyglykolether mit 30 EO, Clariant GmbH) werden in 500 g E-Wasser gelöst. Die Lösung wird auf 80°C erhitzt. Bei dieser Temperatur wird eine Mischung aus 340,6 g N-Vinylformamid und 59,4 g Dioctylmaleinat über 180 Minuten zudosiert. Parallel dazu dosiert man eine Lösung von 2 g Azo-bis-isobutyronitril in N-Vinylformamid zu. Nach Beendigung der Monomerdosierung wird die Reaktionsmischung 90 Minuten bei 80°C nachgeheizt, anschließend abgekühlt und bei unter 30°C über 180 µm-Filter abgelassen.

Die Kolloiddispersionsmischung weist folgende Merkmale auf:

| | |
|---|---|
| Feststoffgehalt | 34% |
| K-Wert | 73,8 |
| Partikelgrößenverteilung aus Mastersizer-Messung Volumen(Massen)-anteile: | dv(10%) 0,322 µm |
| | dv(50%) 0,715 µm |
| | dv(90%) 1,321 µm |
| N-Vinylformamid | < 0,1 % |
| Dioctylmaleinat | 1,4 % |

Im folgenden werden mehrere Beispiele für wiederanfeuchtbare Klebstoffsysteme beschrieben, deren Prüfung wie folgt durchgeführt wurde:

Der zu prüfende wiederanfeuchtbare Klebstoff wurde in einer Naßfilmstärke von 50 µ auf ein einseitig satiniertes Natronkraftpapier (definierte Reißfestigkeit 100 g) von 5 cm Breite und 60 cm Länge aufgebracht. Die Trocknung erfolgte bei Raumtemperatur. Anschließend wurden die beschichteten Papierstreifen 24 Stunden im Normklima (23°C und 50 % relativer Feuchte) gelagert. Die Prüfung der Abbindegeschwindigkeit wurde auf dem Werle Tack Tester durch Laminieren eines beschichteten Papiers mit einem unbeschichteten Papier durchgeführt.
Für die Prüfung wurde die Geräteeinstellung wie folgt vorgenommen:

| | |
|---|---|
| Offene Zeit | 0,5 Sekunden |
| Geschlossene Zeit | 0,5 Sekunden |

Die Befeuchtung der beschichteten Papiere wurde über eine 2 %ige Lösung aus ®Tylose MH 1500 K, Clariant GmbH, vorgenommen. Die Auftragsmenge ist durch den verwendeten Rakel bestimmt und beträgt 22 µ naß.

Das Prüfergebnis wird auf einer mitlaufenden Scheibe angezeigt. Aussagen sind möglich vom Zeitpunkt der beginnenden (Naß-)Tackentwicklung bis zum Papierriß.

### Beispiel 3

Verwendung der Kolloiddispersionsmischung aus Beispiel 1 als wiederanfeuchtbares Klebstoffsystem (Anteil Kolloiddispersionsmischung im Klebstoffsystem: 100 %).

Das Klebstoff-System zeigt trotz eines Feststoffgehaltes von 30 % eine relativ schnelle Trocknung. Es zeichnet sich in der Trocknungsphase zunächst durch einen hohen Naßtack und einen ausgezeichneten Verlauf aus und bildet geschlossene, sehr glatte Filme die eine hohe Blockfestigkeit zeigen. Bei Ausschluß von Wasser können z.B. Beschichtungen auf Papier, Schicht gegen Schicht, gelagert werden, ohne miteinander zu verkleben. Dies wird nicht nur bei Raumtemperatur, sondern auch bei Temperaturen von 50°C mit einer Auflast von 200 g/cm² erreicht.

### Beispiel 4

Die Kolloiddispersionsmischung des Beispiels 1 wird mit einer Vinylacetat-Polymerdispersion (Feststoffgehalt ca. 50 %), z.B. ®Mowilith DH 257 (Clariant GmbH), im Verhältnis 80:20 gemischt.

### Beispiel 5

Die Kolloiddispersionsmischung des Beispiels 1 wird mit einer Vinylacetat-Polymerdispersion (Feststoffgehalt ca. 50 %), z.B. ®Mowilith DH 257 (Clariant GmbH), im Verhältnis 20:80 gemischt.

### Beispiel 6

Die Kolloiddispersionsmischung des Beispiels 1 wird mit einer 30 %igen Lösung eines Polyvinylalkohols, z.B. ®Mowiol 4-88 (Clariant GmbH), im Verhältnis 80:20 gemischt.

Für die Abmischung wird der Polyvinylalkohol unter Rühren in Wasser bei 90°C gelöst. Nach Abkühlung der Lösung auf Raumtemperatur kann eine Abmischung in obigem Verhältnis vorgenommen werden.

### Beispiel 7

Die Kolloiddispersionsmischung des Beispiels 1 wird mit einer 30 %igen Lösung eines Polyvinylalkohols, z.B. ®Mowiol 4-88 (Clariant GmbH), im Verhältnis 20:80 gemischt.

Für die Abmischung wird der Polyvinylalkohol unter Rühren in Wasser bei 90°C gelöst. Nach Abkühlung der Lösung auf Raumtemperatur kann eine Abmischung in obigem Verhältnis vorgenommen werden.

### Beispiel 8

Die Kolloiddispersionsmischung des Beispiels 1 wird mit einer 6 %igen Lösung aus ®Emcol Stärke UK/N (Fa. Emsland) im Verhältnis 80:20 gemischt.

Die Stärkelösung wird hergestellt durch Einstreuen des in kaltem Wasser löslichen Stärkepulvers in Wasser. Um Verklumpungen zu vermeiden, muß die Herstellung der Stärkelösung unter ständigem Rühren vorgenommen werden. Die Stärkelösung ist anschließend durch Zusatz von Konservierungsmittel vor Befall zu schützen.

### Beispiel 9

Die Kolloiddispersionsmischung des Beispiels 1 wird mit einer 6 %igen Lösung aus ®Emcol Stärke UK/N (Fa. Emsland) im Verhältnis 20:80 gemischt.

Die Stärkelösung wird hergestellt durch Einstreuen des in kaltem Wasser löslichen Stärkepulvers in Wasser. Um Verklumpungen zu vermeiden, muß die Herstellung der Stärkelösung unter ständigem Rühren vorgenommen werden. Die Stärkelösung ist anschließend durch Zusatz von Konservierungsmittel vor Befall zu schützen.

Die Ergebnisse der Prüfung der wiederanfeuchtbaren Klebstoffsysteme der Beispiele 3 bis 9 sind in Tabelle 1 zusammengefaßt.

**Tabelle 1**

| Beispiel | Offene Zeit | Geschlossene Zeit | Klebstoffauftrag 50 µ Naßfilm | Abbindebeginn Sekunden | 100 g Wert nach | Wiederanfeuchtbarkeit - |
|---|---|---|---|---|---|---|
| 3 | 0,5 s | 0,5 s | problemlos | nach 3 s | 6 s | sehr gut |
| 4 | 0,5 s | 0,5 s | problemlos | nach 3,5 s | 7 s | sehr gut |
| 5 | 0,5 s | 0,5 s | problemlos | nach 5 s | 8 s | befriedigend |
| 6 | 0,5 s | 0,5 s | problemlos | nach 4 s | 8 s | sehr gut |
| 7 | 0,5 s | 0,5 s | problemlos | nach 3,5 s | 9 s | sehr gut |
| 8 | 0,5 s | 0,5 s | problemlos | nach 4,5 s | 8 s | sehr gut |
| 9 | 0,5 s | 0,5 s | problemlos | nach 10 s | 16 s | gut |

## Patentansprüche

1. Wiederanfeuchtbares Klebstoffsystem enthaltend eine Kolloiddispersionsmischung, die durch Copolymerisation mindestens eines wasserlöslichen Monomeren mit mindestens einem nicht wasserlöslichen Comonomeren in Gegenwart eines micellenbildenden Emulgators erhalten wird, wobei das nicht wasserlösliche Comonomere ausgewählt wird aus der Gruppe. bestehend aus Alkylester der Acrylsäure, Alkylester der Methacrylsäure, Ester der Maleinsäure oder deren Gemischen und wobei der Anteil des mindestens einen wasserlöslichen Monomeren in der Kolloiddispersionsmischung im Bereich von 70 bis 95 Gew. % liegt.

2. Wiederanfeuchtbares Klebstoffsystem gemäß Anspruch 1, **dadurch gekennzeichnet, dass** der Anteil der Kolloiddispersionsmischung im Klebstoffsystem im Bereich von 5 bis 100 % liegt.

3. Wiederanfeuchtbares Klebstoffsystem gemäß Anspruch 1 oder 2, **dadurch gekennzeichnet, dass** es zusätzlich Kunststoffdispersionen unterschiedlicher Monomerenzusammensetzung, Polyvinylalkohol und/oder Stärke enthält.

4. Wiederanfeuchtbares Klebstoffsystem gemäß mindestens einem der Ansprüche 1 bis 3, **dadurch gekennzeichnet, dass** als wasserlösliches Monomer N-Methyl-N-Vinylacetamid, N-Vinyl-2-pyrrolidon oder N-Vinylformamid eingesetzt wird.

5. Wiederanfeuchtbares Klebstoffsystem gemäß mindestens einem der Ansprüche 1 bis 4, **dadurch gekennzeichnet, dass** als nicht wasserlösliches. Comonomer ein unsubstituierter oder alpha-substituierter Ester der Acrylsäure oder ein Ester der Maleinsäure eingesetzt wird.

6. Wiederanfeuchtbares Klebstoffsystem gemäß Anspruch 4 und 5, **dadurch gekennzeichnet, dass** als wasserlösliches Monomer N-Vinyl-2-pyrrolidon und als nicht wasserlösliches Monomer ein Alkylester der Acrylsäure oder Methacrylsäure eingesetzt wird.

7. Wiederanfeuchthares Klebstoffsystem gemäß Anspruch 5 oder 6, **dadurch gekennzeichnet**, das als nicht-wasserlösliches Monomer Butyl- oder Ethylhexylacrylsäureester oder Dioctylmaleinat eingesetzt wird.

8. Wiederanfeuchtbares Kebstoffsystem gemäß mindestens einem der Ansprüche 1 bis 7, **dadurch gekennzeichnet, dass** als Emulgatoren nichtionische Emulgatoren oder Mischungen aus ionischen mit nichtionischen Emulgatoren eingesetzt werden.

9. Wiederanfeuchtbares Klebstoffsystem gemäß mindestens einem der Ansprüche 1 bis 8, **dadurch gekennzeichnet, dass** als Emulgatoren Alkylarylpolyglykolether oder Alkylpolyglykolether mit jeweils 3 bis 50 mol Ethylenoxid-Einheiten, Blockoopolymere des Ethylenoxids mit Propylenoxid, Alkyl- oder Alkylarylsulfonate, Alkylsulfate, Alkyl- und Arylethersulfate und -phosphate mit jeweils vorzugsweise 8 bis 18 Kohlenstoff-Atomen im lipophilen und bis zu 50 Ethylenoxid- oder Propylenoxid-Einheiten Im hydrophilen Teil sowie Mono- oder Diester der Sulfobernsteinsäure oder Alkylphenole mit jeweils vorzugsweise 8 bis 18 Kohlenstoffatomen im Alkylrest eingesetzt werden.

10. Verwendung des wiederanfeuchtbaren Klebstoffsystems gemäß Anspruch 1 für Briefmarken, Mundklappenleime für Briefumschläge, Klebebänder und Klebstoffe für den Fußbodenbereich.

## Claims

1. A remoistenable adhesive system which comprises a colloid dispersion mixture obtained by copolymerizing at least one water-soluble monomer with at least one water-insoluble comonomer in the presence of a micelle-forming emulsifier, said water-insoluble comonomer being selected from the group consisting of alkyl esters of acrylic acid, alkyl esters of methacrylic acid and esters of maleic acid or mixtures thereof, and the proportion of said at least one water-soluble monomer in the colloid dispersion mixture being from 70 to 95% by weight.

2. The remoistenable adhesive system as claimed in claim 1, wherein the proportion of the colloid dispersion mixture in the adhesive system is from 5 to 100%.

3. The remoistenable adhesive system as claimed in at least one of claim 1 or 2, which further comprises polymer dispersions of different monomer compositions, polyvinyl alcohol, and/or starch.

4. The remoistenable adhesive system as claimed in at least one of claims 1 to 3, wherein said water-soluble monomer is N-methyl-N-vinylacetamide, N-vinyl-2-pyrrolidone or N-vinylformamide.

5. The remoistenable adhesive system as claimed in at least one of claims 1 to 4, wherein said water-insoluble comonomer is an unsubstituted or alpha-substituted ester of acrylic acid or an ester of maleic acid.

6. The remoistenable adhesive system as claimed in claim 4 or 5, wherein said water-soluble monomer is N-vinyl-2-pyrrolidone and said water-insoluble monomer is an alkyl ester of acrylic or methacrylic acid.

7. The remoistenable adhesive system as claimed in claim 5 or 6, wherein said water-insoluble monomer is butyl or ethylhexyl acrylate or dioctyl maleate.

8. The remoistenable adhesive system as claimed in at least one of claims 1 to 7, wherein said emulsifier comprises nonionic emulsifiers or mixtures of ionic with nonionic emulsifiers.

9. The remoistenable adhesive system as claimed in at least one of claims 1 to 8, wherein said emulsifier comprises alkylaryl polyglycol ethers or alkyl polyglycol ethers each having from 3 to 50 mol of ethylene oxide units, block copolymers of ethylene oxide with propylene oxide, alkylsulfonates or alkylarylsulfonates, alkyl sulfates, alkyl and aryl ether sulfates and phosphates each having preferably 8 to 18 carbon atoms in the lipophilic portion and up to 50 ethylene oxide or propylene oxide units in the hydrophilic portion, and also monoesters or diesters of sulfosuccinic acid, or alkylphenols having in each case preferably 8 to 18 carbon atoms in the alkyl radical.

10. The use of a remoistenable adhesive system as claimed in claim 1 for postage stamps, rear-flap gums for envelopes, adhesive tapes and adhesives for the flooring sector.

## Revendications

1. Système de colle réhumidifiable contenant un mélange de dispersions colloïdales ; lequel mélange est obtenu par copolymérisation d'au moins un monomère soluble dans l'eau avec au moins un comonomère non-soluble dans l'eau en présence d'un émulsifiant favorisant la formation de micelles, où le comonomère non-soluble dans l'eau sera choisi dans le groupe constitué des esters alkyliques de l'acide acrylique, des esters alkyliques de l'acide méthacrylique, des esters de l'acide maléique, ou de leur mélange, et où le monomère soluble dans l'eau, requis comme minimum, est présent dans le mélange de dispersions colloïdales dans une proportion située dans la plage de 70 à 95 % en poids.

2. Système de colle réhumidifiable selon la revendication 1, **caractérisé en ce que** la proportion du mélange de dispersions colloïdales dans le système de colle est située dans la plage de 5 à 100 %.

3. Système de colle réhumidifiable selon la revendication 1 ou 2, **caractérisé en ce qu'**il contient aussi des dispersions de produits synthétiques de différentes compositions de monomères, d'alcool polyvinylique et/ou d'amidon.

4. Système de colle réhumidifiable selon au moins une des revendications 1 à 3, **caractérisé en ce que** du N-méthyle-N-acétamide vinylique, de la N-vinyle-2-pyrrolidone ou du N-formamide vinylique est utilisé comme monomère soluble dans l'eau.

5. Système de colle réhumidifiable selon au moins une des revendications 1 à 4, **caractérisé en ce qu'**un ester d'acide acrylique, non-substitué ou alpha-substitué, ou un ester d'acide maléique est utilisé comme comonomère non-soluble dans l'eau.

6. Système de colle réhumidifiable selon les revendications 4 et 5, **caractérisé par** l'utilisation de N-vinyle-2-pyrrolidone comme monomère soluble dans l'eau, et d'un ester alkylique de l'acide acrylique ou de l'acide méthacrylique comme monomère non-soluble dans l'eau.

7. Système de colle réhumidifiable selon les revendications 5 ou 6, **caractérisé par** l'utilisation d'acrylate de butylhexyle ou d'acrylate d'éthylhexyle ou de maléinate de dioctyle comme monomère non-soluble dans l'eau.

8. Système de colle réhumidifiable selon au moins une des revendications 1 à 7, **caractérisé par** l'utilisation d'émulsifiants non-ioniques ou de mélanges d'émulsifiants ioniques et non-ioniques comme émulsifiants.

9. Système de colle réhumidifiable selon au moins une des revendications 1 à 8, **caractérisé par** l'utilisation comme émulsifiants de polyglycoléther d'alkylaryle ou de polyglycoléther d'alkyle chacun avec 3 à 50 moles d'unités d'oxyde d'éthylène, de copolymères à blocs de l'oxyde d'éthylène avec l'oxyde de propylène, de sulfonates d'alkyle ou d'alkylaryle, de sulfates d'alkyle, de sulfates et de phosphates d'alkyléther et d'aryléther chacun de préférence avec 8 à 18 atomes de carbone dans la partie lipophile, et jusqu'à 50 unités d'oxyde d'éthylène ou d'oxyde de propylène dans la partie hydrophile, ainsi que de mono-esters ou diesters d'acide sulfosuccinique ou d'alkylphénols avec de préférence chacun de 8 à 18 atomes de carbones dans le radical alkyle.

10. Utilisation du système de colle réhumidifiable selon la revendication 1 pour les timbres postaux, pour l'enduit collant des rabats d'enveloppes, pour les rubans adhésifs et pour les colles de plancher.
